# EUROPÄISCHE PATENTSCHRIFT

(11) **EP 3 623 635 B1**
(45) Veröffentlichungstag und Bekanntmachung des Hinweises auf die Patenterteilung: **12.01.2022**
(21) Anmeldenummer: 19194637.5
(22) Anmeldetag: 30.08.2019
(51) Int. Cl.: F04D 23/00, B27L 11/00, B65G 31/04, F04D 29/42

(54) **FÖRDERER FÜR HACKSCHNITZEL UND ANDERE SCHÜTTGÜTER**
CONVEYOR FOR CHIPS AND OTHER BULK GOODS
TRANSPORTEUR POUR COPEAUX ET AUTRES PRODUITS EN VRAC

(30) Priorität: 17.09.2018 DE 102018122716
(43) Veröffentlichungstag der Anmeldung: 18.03.2020
(73) Patentinhaber: Technische Universität Dresden, 01069 Dresden (DE)
(72) Erfinder: Firus, Siegfried, 01062 Dresden (DE); Belter, Adolf, 01309 Dresden (DE); Kahle, Roman, 01069 Dresden (DE)
(74) Vertreter: Kailuweit & Uhlemann Patentanwälte Partnerschaft mbB

(56) Entgegenhaltungen:
- EP-A1- 0 383 694
- EP-A1- 3 366 376
- DE-A1-102013 202 454
- DE-C- 319 275
- RU-C1- 2 021 427

## Beschreibung

Die vorliegende Erfindung hat eine Vorrichtung zum Fördern von Schüttgütern, insbesondere Holz-Hackschnitzeln, zum Gegenstand.

Schüttgutförderer dienen dazu, Hackschnitzel, Häckselmaterial, Granulate sowie Getreidekörner zu transportieren. Das zu fördernde Material wird durch ein in einem zylindrischen Gehäuse rotierenden Flügelrad/Schaufelrad so stark beschleunigt, dass die gewünschte Wurfweite oder Förderhöhe des Schüttgutes erreicht wird.

Hackschnitzelförderer beziehungsweise Schüttgutförderer sind in unterschiedlichen Ausführungen bekannt.

Das Dokument DE 101 30 652 A1 (= EP 1 269 822 A1) offenbart ein Gebläse für eine Hackmaschine mit einem horizontal gelagerten Rotor, wobei die Zuführung des Materials seitlich in der Ebene der Rotorschaufeln und koaxial zur Rotationsachse des Rotors erfolgt.

In der EP 3 366 376 A1 ist ein Hackschnitzelförderer beschrieben, der Schaufeln aufweist, die an einer mitrotierenden Rückwand (Rotorwandscheibe) angeordnet sind. Im Zusammenspiel mit einem Rotorwandring und einem Hackgutteppich soll die Rotorwandscheibe für einen reibungsarmen Hackguttransport sorgt

In der DE 10 2013 202 454 A1 wird eine mehrstufige Vorrichtung beschrieben, welche die Zerkleinerung des Holzes, die Homogenisierung und die Förderung der Hackschnitzel leistet. Die Förderung erfolgt mit einem Wurfgebläse für Hackschnitzel, in das optional eine Vorrichtung zur Nachzerkleinerung der Hackschnitzel integriert ist.

Aus der Schrift EP 1 649 933 A1 ist eine Zerkleinerungsmaschine mit konischem Hackrotor bekannt, wobei das Fördergebläse unterhalb des Hackrotors angeordnet ist. Somit fallen die Hackschnitzel von oben auf den vertikal gelagerten Gebläserotor und werden an der Umfangsseite des Gehäuses aus dem Gebläse ausgetragen.

Aus Dokument EP 2 452 791 A2 ist eine Gebläsevorrichtung für Holzhackschnitzel bekannt, bei der die Zuführung des Hackmaterials an der Mantelseite des Gehäuses erfolgt. Es sind zwei Austrittsmöglichkeiten vorgesehen, die gleichfalls an der Mantelseite des Gehäuses angeordnet sind.

In der aus Dokument WO 2016/101039 A1 bekannten Transportvorrichtung erfolgt die Zufuhr der Hackschnitzel zur Transporteinrichtung ebenfalls auf der Mantelseite des Gehäuses.

In Dokument EP 0 875 135 B1 ist ein Gebläse zum Fördern stark schleißender Blasgüter bekannt. Dabei ist unter anderem vorgesehen, dass die zu fördernden Güter unterhalb der Welle von der Innenseite den abgesetzten Schaufeln eines Förderrades zugeführt werden. Weiterhin ist ein Drucklüfterlaufrad auf derselben Welle angeordnet, das dazu dient, zusätzliche Luft anzusaugen, um die Güter mit einem stärkeren Luftstrom zu transportieren.

Bei den bekannten Fördereinrichtungen kann es bei der Zufuhr der zu transportierenden Güter zu Quetschungen und Verklemmungen kommen. Weiterhin wird neben den Hackschnitzeln eine große Menge Luft mitgeführt, die die erforderliche Antriebsleistung und letztlich den Energiebedarf erhöht. Darüber hinaus wird der Energiebedarf aufgrund der Reibung der Hackschnitzel an den Gehäusewänden erhöht.

Es stellt sich somit die Aufgabe, einen Hackschnitzelförderer bereitzustellen, der energieeffizient und störungsfrei betrieben werden kann. Insbesondere soll die mit dem Hackschnitzelvolumenstrom mitgeführte Luftmenge reduziert werden. Zudem soll die Reibung zwischen Hackschnitzel und Gehäuse des Hackschnitzelförderers reduziert und somit der unerwünschten weiteren Zerkleinerung der Hackschnitzel entgegengewirkt werden. Darüber hinaus soll weitgehend ausgeschlossen sein, dass bei der Zufuhr des Schüttgutes in den Hackschnitzelförderer Quetschungen beziehungsweise Zerkleinerungen der Hackschnitzel erfolgen.

Erfindungsgemäß wird die Aufgabenstellung mit einem Hackschnitzelförderer gemäß Anspruch 1 gelöst.

Vorteilhafte Ausgestaltungen der Erfindung sind in den rückbezogenen Unteransprüchen offenbart.

Der erfindungsgemäße Hackschnitzelförderer mindestens weist auf:
- ein Schleuderrad zur Förderung von Hackschnitzeln, wobei das Schleuderrad auf einer im wesentlichen horizontal ausgerichteten Antriebswelle angeordnet ist,
- am Schleuderrad radial außen liegend im Wesentlichen radial ausgerichtete Schaufeln angeordnet sind,
- ein Gehäuse, dass das Schleuderrad in Form zweier paralleler Seitenwände und einer Umfangswandung umgibt und eine Zuführungsöffnung für Hackschnitzel in einer Seitenwand und eine im Wesentlichen senkrecht nach oben gerichtete Auswurföffnung in der Umfangswandung, durch die hindurch die Hackschnitzel aus dem Gehäuse gefördert werden, aufweist,
- einen Antrieb für die Antriebswelle des Schleuderrades, wobei
das Schleuderrad eine Radscheibe und eine Kreisringscheibe aufweist, wobei die Schaufeln zwischen der Radscheibe und der Kreisringscheibe angeordnet sind und wobei die Radscheibe an der Radnabe befestigt ist,
oder
das Schleuderrad zwei Kreisringscheiben aufweist und die Schaufeln zwischen diesen zwei Kreisringscheiben angeordnet und über an den Schaufeln angeordnete Streben, die eine geringere axiale Ausdehnung aufweisen, als die Schaufeln, mit der Radnabe verbunden sind,
wobei
   - die Zuführungsöffnung in einer Seitenwand angeordnet ist, der eine Kreisringscheibe des Schleuderrades benachbart ist und die Zuführungsöffnung eine geringere Höhe über dem Boden aufweist, als die Antriebswelle,
   - die Rotationsachse der Antriebswelle des Schleuderrades außerhalb der Zuführungsöffnung liegt,
   - die Auswurföffnung, in Drehrichtung des Schleuderrades gesehen, zwischen 90° und 270° hinter der Zuführungsöffnung angeordnet ist,
   - die radiale Ausdehnung der Schaufeln in Nabenrichtung an der Kreisringscheibe die radiale Ausdehnung der Kreisringscheibe nicht überschreitet,
   - die Zuführungsöffnung eine axial ins Innere des Gehäuses gerichtete Ausstülpung aufweist, die in axialer Richtung über die Kreisringscheibe hinweg in das Gehäuse hineinreicht und die in radialer Richtung von den umlaufenden Schaufeln beabstandet ist, und
   - die ins Innere des Gehäuses gerichtete Ausstülpung axial von der Radscheibe oder den an den Radschaufeln angeordneten Streben beabstandet ist.

Die Bezugszeichen verweisen auf entsprechende Elemente in den Zeichnungen.

Ausgangspunkt der Erfindung ist ein Hackschnitzelförderer, der aus einem im Wesentlichen zylinderförmig ausgebildeten Gehäuse und einem innerhalb des Gehäuses rotierenden Schleuderrad besteht. Das Gehäuse besteht bevorzugt aus einem metallischen Werkstoff wie bspw. Stahlblech. Das Schleuderrad weist eine Mehrzahl von an seinem Umfang und gleichmäßig auf diesem verteilten Schaufeln auf. Die Schaufeln sind vorzugsweise flach und ohne Krümmung ausgeführt und radial ausgerichtet, d. h., dass sie jeweils in einer Ebene liegen, in der auch die Längserstreckung der Rotationsachse liegt. In einer weiteren bevorzugten Ausführungsform weisen die Schaufeln Krümmungen oder Knicke auf, die bei abnehmendem Abstand zur Rotationsachse zunehmend in Drehrichtung ausgerichtet sind. Die Schaufeln sind zwischen einer Radscheibe und einer Kreisringscheibe oder zwischen zwei Kreisringscheiben angeordnet. In der ersten Ausführungsform wird das Schleuderrad durch die Radscheibe (ggf. mittels einer Nabe) an der Antriebswelle befestigt, in der zweiten Ausführungsform weisen die Schaufeln Streben auf, über die sie mit der Antriebswelle bzw. einer Nabe auf der Antriebswelle verbunden sind.

Die Zuführung der Hackschnitzel erfolgt durch die in einer der Seitenwände angeordneten Zuführungsöffnung des Gehäuses. Die Zuführung der Hackschnitzel in den Hackschnitzelförderer erfolgt mittels einer Hackschnitzeltransportvorrichtung. Im oberen Bereich des Gehäuses ist in der Umfangswandung eine tangential orientierte Auswurföffnung angeordnet. Die Rotationsachse des Zylinders ist dabei parallel bzw. annähernd parallel zur Erdoberfläche ausgerichtet.

Erfindungsgemäß ist vorgesehen, dass die Unterkante der Zuführungsöffnung des Hackschnitzelförderers eine geringere Höhe über dem Boden aufweist als die Antriebswelle. Die Zuführungsöffnung liegt weiterhin zwischen der Rotationsachse des Schleuderrades und einem von den Innenkanten der rotierenden Schaufeln beschriebenen Kreisbogen. Die Zuführungsöffnung weist eine ins Innere des Gehäuses gerichtete Umrandung auf, die im Folgenden als Ausstülpung bezeichnet wird. Diese gewährleistet, dass die zugeführten Hackschnitzel nicht unmittelbar an der Seitenwand herabfallen, sondern in dem Bereich der rotierenden Schaufeln aufgegeben werden.

In einer ersten besonders einfachen Ausführungsform sind gegenüberliegende Kanten die Schaufeln flach, quadratisch und radial ausgerichtet ausgeführt. Somit ist die Kante jeder Schaufel gleich lang.

Die zwischen der Radscheibe und der Kreisringscheibe angeordneten Schaufeln sind von der Welle mit einem Abstand A3 beabstandet sind und erstrecken sich im Wesentlichen in radialer Richtung. In den Abstand A3 zwischen den Innenkanten der Schaufeln und der Welle werden von der Seite des Gehäuses, der eine, gleichfalls zur Welle beabstandete Kreisringscheibe benachbart ist, die Hackschnitzel dem Hackschnitzelförderer über die Zuführungsöffnung zugeführt. Dementsprechend fallen die Hackschnitzel in den von den Schaufeln durchstrichenen Raum und werden von diesen in Bewegung versetzt und entsprechend mitgeführt. Auf die Hackschnitzel wirken aufgrund der Rotation Zentrifugalkräfte, die dazu führen, dass die Hackschnitzel in Richtung der Unfangswandung des Gehäuses bewegt werden. In der Umfangswandung ist eine tangential zur Umfangswandung orientierte Auswurföffnung/Auslassöffnung, erfindungsgemäß senkrecht nach oben gerichtet, angeordnet, durch die die aufgrund der rotierenden Schaufeln mit kinetischer Energie versehenen Hackschnitzel das Gehäuse tangential verlassen. Optional ist eine Auswurfführung, bspw. in Form eines Rohres, optional teleskopierbar, vorgesehen.

Aus der erfindungsgemäßen Anordnung ergeben sich vorteilhafte Effekte. Die Zuführung der Hackschnitzel kann durch den Abstand A3 zwischen den Schaufeln und der Nabe ins Innere des rotierenden Schaufelrades erfolgen. Damit erfolgt eine optimale Zuführung der Hackschnitzel. Auf die Hackschnitzel wirken aufgrund der Zuführung von oben und durch die Abstände der Zuführungsöffnung zur Nabe A5, zur Radscheibe A6 und zu den Innenkanten der Schaufeln A4 keine Scher- beziehungsweise Quetschkräfte ein, wie das bei Anordnung der Zuführungsöffnung in der Umfangswandung oder in einer Seitenwand im Bereich der Schaufeln der Fall wäre. Damit wird eine unnötige beziehungsweise sogar störende, weitere Zerkleinerung beziehungsweise Quetschung der Hackschnitzel vermieden.

Zudem kann die Antriebsenergie für den Hackschnitzelförderer aufgrund dieser entfallenden weiteren Zerkleinerung und Quetschung der Hackschnitzel reduziert werden.

Die Anordnung der Schaufeln erfolgt ringförmig beabstandet zur Nabe. Durch die, im Vergleich mit üblicherweise bis zur Nabe herangeführten Schaufeln, hier verkürzt ausgebildeten Schaufeln, wird die angesaugte und letztlich mit den Hackschnitzeln mitgeführte Luftmenge vorteilhaft deutlich verringert. Der hier unerwünschte Gebläseeffekt wird somit reduziert und dementsprechend gleichfalls Antriebsenergie eingespart. Auch sind so die Schaufeln in der erfindungsgemäßen Vorrichtung leichter.

Somit können die Hackschnitzel mit einem im Vergleich zu üblichen Fördereinrichtungen erheblich reduzierten Energieeinsatz über die Auswurföffnung nach oben, beispielsweise auf einen Anhänger oder in ein Silo, gefördert werden.

Durch die seitlich der Schaufeln angeordnete Radscheibe und Kreisringscheibe wird der Kontakt der Hackschnitzel mit der Seitenwand und somit entsprechende Reibung und Quetschungen vermieden, was einen energieeffizienten Betrieb des Hackschnitzelförderers weiter unterstützt.

In der zweiten Ausführungsform sind die Schaufeln zwischen zwei Kreisringscheiben angeordnet. Die Befestigung an der Antriebswelle bzw. einer Nabe auf der Antriebswelle erfolgt dann mittels Streben von den Schaufeln zur Antriebswelle bzw. Nabe.

Die Anordnung der Schaufeln zwischen einer Radscheibe und einer Kreisringscheibe bzw. zwischen zwei Kreisringscheiben erzielt eine Stabilisierung der Schaufeln. Diese geraten nunmehr weniger leicht in Schwingungen und können daher vorteilhaft aus einem dünneren Material hergestellt werden. Die Radscheibe und die Kreisringscheibe bzw. die beiden Kreisringscheiben laufen in einem geringen Abstand A1 (bevorzugt geringer als 5mm, besonders bevorzugt geringer als 1,5mm und ganz besonders bevorzugt geringer, als 0,5mm) zur jeweils benachbarten Seitenwand um. Sie verhindern den Kontakt zwischen den Seitenwänden und den Hackschnitzeln. Dies vermeidet vorteilhaft die Entstehung von Reibung zwischen den Seitenwänden und den Hackschnitzeln, was ebenfalls zur Energieeinsparung beiträgt.

Der radiale Abstand A4 der Ausstülpung der Zuführungsöffnung von den umlaufenden Innenkanten der Schaufeln sowie der axiale Abstand A6 der Ausstülpung der Zuführungsöffnung zu der Radscheibe ist bevorzugt größer als die größte Abmessung der zu fördernden Hackschnitzel. Damit wird gewährleistet, dass es nicht zu Quetschungen beziehungsweise Klemmungen der Hackschnitzel zwischen der Zuführungsöffnung und den umlaufenden Innenkanten der Schaufeln beziehungsweise zwischen der Zuführungsöffnung und der Radscheibe kommt. Dementsprechend werden Betriebsstörungen, Beschädigungen des Hackschnitzelförderers und Energieverluste vermieden beziehungsweise erheblich reduziert.

Gemäß einer bevorzugten Ausführung des Hackschnitzelförderers ist die Hackschnitzeltransportvorrichtung als Förderschnecke, Förderband oder Schurre ausgebildet. Alle genannten Hackschnitzeltransportvorrichtungen sind geeignet, die Hackschnitzel dem Hackschnitzelförderer durch die Zuführungsöffnung auf der Innenseite der Schaufeln unterhalb der Welle zuzuführen.

In einer zweiten bevorzugten Ausführungsform zeichnen sich die Schaufeln dadurch aus, dass diese in radialer Richtung, ausgehend von der radial orientierten Außenseite der Schaufeln, nach innen verlaufend eine Krümmung oder eine Kröpfung aufweisen, die jeweils in Drehrichtung orientiert ist. Durch die Ausführungsform werden auf die rotierenden Schaufeln aufprallende Hackschnitzel in überwiegend radialer Richtung von den Schaufeln abgelenkt. Die Hackschnitzel prallen somit nicht mehrfach zwischen den Schaufelenden und der Welle oder sonstigen Einbauten ab, sondern werde unmittelbar der Förderung zugeführt. Auch dies spart Antriebsenergie ein.

Entsprechend einer weiteren besonders bevorzugten Ausführung des erfindungsgemäßen Hackschnitzelförderers ist vorgesehen, dass die Krümmung der Schaufeln kegelstumpfmantelsegmentförmig ausgebildet ist, wobei die Innenkanten der Schaufeln schräg/in einem Winkel zur Welle und die Außenkanten der Schaufeln parallel zur Umfangswandung des Gehäuses orientiert sind. Die Kegelfußseite der Schaufeln ist dabei zur Radscheibe hin orientiert.

Diese Ausbildung der Schaufeln führt dazu, dass die rotierenden Innenkanten der Schaufeln einen Kegelstumpfmantel beschreiben. Die Außenseite der Schaufeln verläuft entsprechend parallel zur Umfangswandung des Gehäuses in axialer Richtung.

Dadurch wird eine weitere Versteifung und bessere Verbindung der Schaufeln mit der Scheibe erreicht.

Gemäß einer Ausführung des Hackschnitzelförderers beträgt die kleinste radiale Ausdehnung der Schaufeln bevorzugt zwischen einem Fünftel und einem Zwanzigstel des Durchmessers des Schleuderrades. Damit sind die Schaufeln nur im Bereich der zu transportierenden Hackschnitzel angeordnet. Eine größere radiale Ausdehnung der Schaufeln würde zu einer stärkeren, auf die Luft einwirkenden Zentrifugalkraft führen und somit die mit den Hackschnitzeln mitgeführte Luftmenge erhöhen. Durch die deutlich verkürzte Ausbildung der Schaufeln kann somit der Luftdurchsatz verringert und dementsprechend die erforderliche Antriebsenergie des Hackschnitzelförderers erheblich reduziert werden.

Eine bevorzugte Ausführung des erfindungsgemäßen Hackschnitzelförderers zeichnet sich dadurch aus, dass der radiale Abstand der Außenkante der Schaufeln zur Umfangsfläche geringer ist als der radiale Abstand der Radscheibe und des Kreisrings bzw. der Kreisringe zur Umfangsfläche. Die Außenkanten der Schaufeln ragen somit über die Radscheibe bzw. die Kreisscheiben hinaus. Die Schaufeln sind in dieser Ausführungsform bevorzugt mit auswechselbaren Außenkanten versehen. Die ermöglicht es, die Außenkanten der Schaufeln, die einer besonderen Beanspruchung unterliegen bei Verschleiß unkompliziert zu wechseln.

Gemäß einer weiteren bevorzugten Ausführung des erfindungsgemäßen Hackschnitzelförderers ist vorgesehen, dass die Radscheibe innerhalb der Befestigung der Schaufeln mit Speichen ausgebildet ist. Im inneren Bereich des Schleuderrades ist, abgesehen von der Zuführung der nach unten auf die Schaufeln fallenden Hackschnitzel, keine Mitführung der Hackschnitzel vorgesehen. Daher muss in diesem Bereich auch keine Reibung der Hackschnitzel mit den Seitenwänden vermieden werden. Dementsprechend kann die Radscheibe und damit das Schleuderrad durch Speichen (Streben) leichter ausgeführt werden. Damit ist es möglich, das Anlaufmoment des Hackschnitzelförderers zu verringern, so dass ein kleinerer Antriebsmotor installiert werden kann.

Die zahlreichen, einander ergänzenden und vorteilhaft zusammenwirkenden Erfindungsmerkmale des Anspruchs 1 führen insgesamt zur Reduzierung der Herstellungskosten und aufgrund der eingesparten Energie zur Reduzierung der Betriebskosten des Hackschnitzelförderers.

Die Erfindung ist nicht auf die dargestellten und beschriebenen Ausführungsformen beschränkt, sondern ist ausschließlich durch die nachfolgenden Ansprüche bestimmt.

Nachfolgend werden mehrere Ausführungsbeispiele der Erfindung beschrieben.

Es zeigen:
Fig. 1a einen Querschnitt durch einen Hackschnitzelförderer gemäß Stand der Technik,
Fig. 1b einen Längsschnitt durch einen Hackschnitzelförderer gemäß Stand der Technik,
Fig. 2a einen Querschnitt durch einen Hackschnitzelförderer mit radial orientierten Schaufeln,
Fig. 2b einen Längsschnitt durch einen Hackschnitzelförderer mit radial orientierten Schaufeln,
Fig. 3a einen Längsschnitt durch einen Hackschnitzelförderer mit in Drehrichtung gekröpften Schaufeln,
Fig. 3b einen Querschnitt durch einen Hackschnitzelförderer mit in Drehrichtung gekröpften Schaufeln,
Fig. 3c einen zweiten Querschnitt durch einen Hackschnitzelförderer in Richtung der Zuführungsöffnung mit in Drehrichtung gekröpften Schaufeln,
Fig. 4a einen Längsschnitt durch einen Hackschnitzelförderer mit in Drehrichtung gebogenen Schaufeln,
Fig. 4b einen Querschnitt durch einen Hackschnitzelförderer mit in Drehrichtung gebogenen Schaufeln,
Fig. 4c einen zweiten Querschnitt durch einen Hackschnitzelförderer in Richtung der Zuführungsöffnung mit in Drehrichtung gebogenen Schaufeln und
Fig. 5 eine Perspektivansicht einer kegelstumpfmantelsegmentförmig gebogenen Schaufel.

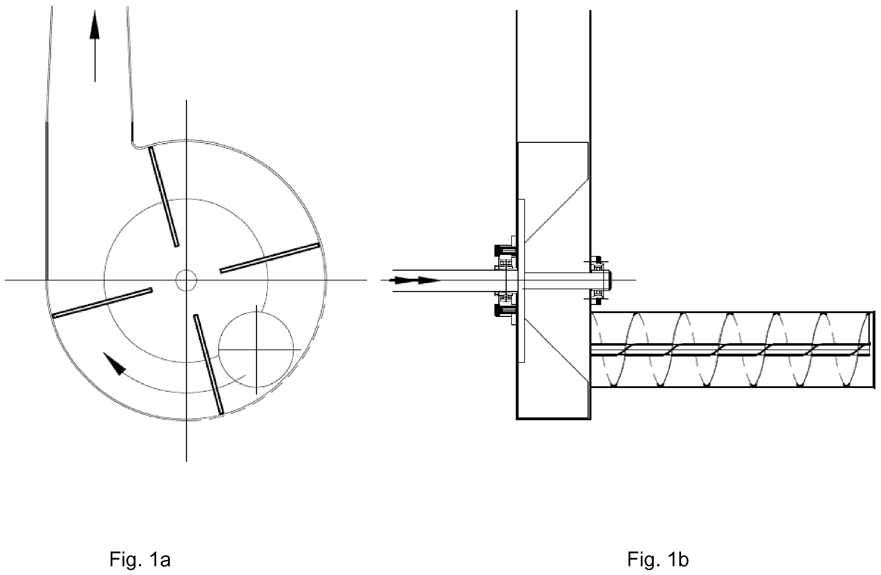

Die Fig. 1a zeigt einen Querschnitt durch einen Hackschnitzelförderer gemäß Stand der Technik. In Fig. 1b ist ein Längsschnitt durch den in Fig. 1a gezeigten Hackschnitzelförderer dargestellt.

Der Hackschnitzelförderer besteht aus einem zylinderförmigen Gehäuse 2 und einem darin konzentrisch rotierenden Schaufelrad 1. Das Schaufelrad 1 besteht aus einer mittels Nabe 11 mit der Welle 12 verbundenen Radscheibe 13, wobei die Schaufeln 15 in radialer Richtung R an der Radscheibe 13 angeordnet sind. Das Schaufelrad 1 ist mit der Welle 12 konzentrisch im Gehäuse 2 gelagert. Das Gehäuse besteht aus zwei Seitenwänden 21, 22 und einer Umfangswandung 23.

In der Seitenwand 22 des Gehäuses 2 ist eine hier als Förderschnecke 40 ausgebildete Hackschnitzeltransportvorrichtung 40 angeordnet, die die Zufuhr der Hackschnitzel zum Hackschnitzelförderer durch die seitliche Zuführungsöffnung 24 realisiert. Dementsprechend werden die Hackschnitzel durch die seitliche Zuführungsöffnung 24 in den Bereich der Schaufeln 15 geschoben. Dadurch, dass die Schaufeln 15 bis an die Welle 12/Nabe 11 herangeführt sind, kommt es im Bereich der Zuführungsöffnung 24 bei der Zuführung der Hackschnitzel zu Verklemmungen und Quetschungen der Hackschnitzel zwischen der feststehenden Seitenwand 22 und den in Drehrichtung DR bewegten Schaufeln 15, die zu einer ungewollten Zerkleinerung der Hackschnitzel führen. Dadurch wird insbesondere der Energiebedarf erhöht. Weiterhin kommt es zu einem erhöhten Verschleiß an Schaufelrad 1 und Gehäuse 2. Die Hackschnitzel werden durch eine in der Umfangswandung 23 des Gehäuses 2 angeordnete, tangential orientierte Auswurföffnung 25 nach oben aus dem Hackschnitzelförderer gefördert. Durch die an die Nabe 11 herangeführten Schaufeln 15 wird zudem eine große Luftmenge angesaugt und mit den Hackschnitzeln mitgeführt Dementsprechend erhöht sich dadurch der Energiebedarf zum Antrieb des Hackschnitzelförderers.

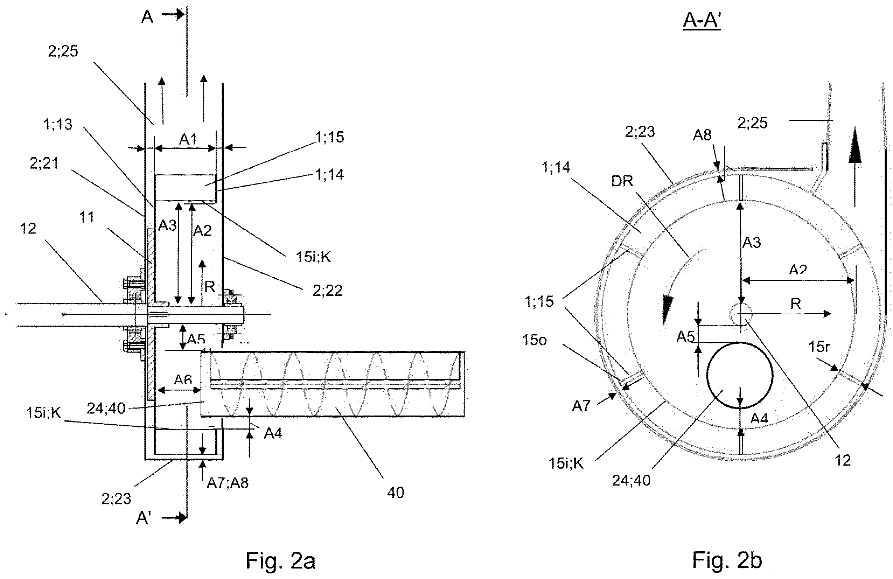

In Fig. 2a ist beispielhaft ein Querschnitt und in Fig. 2b ein Längsschnitt durch einen erfindungsgemäßen Hackschnitzelförderer mit radial orientierten Schaufeln 15 gezeigt.

Der prinzipielle Aufbau gleicht dem in Fig. 1 gezeigten Hackschnitzelförderer. Das Gehäuse 2 des Hackschnitzelförderers hat beispielsweise einen Durchmesser von 90 cm und ist aus Stahlblech gefertigt.

Das konzentrisch im Gehäuse 2 gelagerte Schleuderrad 1 ist durch eine Radscheibe 13 mit der Nabe 11 und somit mit der Antriebswelle 12 verbunden. Der Radscheibe 13 axial gegenüberliegend ist eine Kreisringscheibe 14 angeordnet.

Zwischen der Radscheibe 13 und der Kreisringscheibe 14 sind die sich in radialer Richtung R erstreckenden Schaufeln 15 des Schleuderrades 1 befestigt. Die Innenkanten 15i der Schaufeln 15, die durch ihre Rotation einen Schaufelinnenkantenkreis K beschreiben, schließen hier mit der Innenseite der Kreisringscheibe 14 ab. Dementsprechend weist der Abstand A3 der Innenkanten 15i der Schaufeln 15 zur Nabe 11 dasselbe Maß auf wie der Abstand A2 des Innendurchmessers der Kreisringscheibe 14 zur Nabe 11 (beziehungsweise Welle 12). Der durch die Innenkanten 15i der Schaufeln 15 beschriebene Kreis K weist hier einen Durchmesser von 85 cm auf. Die radiale Ausdehnung 15r der Schaufeln 15, die sich aus der Differenz zwischen der umlaufenden Innenkante 15i und der umlaufenden Außenkante 15o der Schaufeln 15 ergibt, beträgt damit 7,5 cm. Somit beträgt die radiale Ausdehnung 15r der Schaufeln 15 ein 12-tel des Außendurchmessers des Schaufelrades 1.

Durch die Abstände A2 und A3 ist es erfindungsgemäß entsprechend vorgesehen, dass die Förderschnecke 40 durch eine in der Seitenwand 21 angeordnete Zuführungsöffnung 24 in den Zwischenraum zwischen Schaufeln 15 und Nabe 11/Welle 12 unterhalb der Nabe 11/Welle 12 hineingeführt ist. Dementsprechend fallen die Hackschnitzel in den von den Schaufeln 15 durchstrichenen Bereich des Gehäuses 2. Somit werden die Hackschnitzel von den Schaufeln 15 mitgeführt und entsprechend beschleunigt. Die Hackschnitzelzufuhr erfolgt somit auf eine Weise, die Quetschungen und Scherungen der Hackschnitzel und dementsprechend ungewollte Zerkleinerungen der Hackschnitzel im Bereich der Zuführungsöffnung 24 vermeidet.

Aufgrund der Rotation des Schleuderrades 1 wirken auf die Hackschnitzel Zentrifugalkräfte, die bewirken, dass die Hackschnitzel an die Umfangswandung 23 des Gehäuses 2 gedrückt werden. Durch eine etwa 90° nach der Zuführungsöffnung 24 beginnende, in der Umfangswandung 23 angeordnete, tangential orientierte Auswurföffnung 25 werden die Hackschnitzel aus dem Hackschnitzelförderer nach oben ausgeworfen und gelangen somit an ihren Bestimmungsort, wie beispielsweise in ein Silo (nicht dargestellt).

Durch die seitlich der Schaufeln 15 und somit der mitgeführten Hackschnitzel angeordnete Radscheibe 13 und Kreisringscheibe 14 wird die Reibung mit den Seitenwänden 21, 22 des Gehäuses 2 vermieden. Die Radscheibe 13 und die Kreisringscheibe 14 sind mit einem möglichst geringen Abstand A1 zu den Seitenwänden 21, 22 des Gehäuses 2 angeordnet. Somit wird das Eindringen von Holzschnitzeln in den Zwischenraum A1 und damit Verklemmungen der Hackschnitzel zwischen der Radscheibe 13 beziehungsweise der Kreisringscheibe 14 und den Seitenwänden 21, 22 vermieden. Durch die gegenüber Fig. 1 deutlich kürzer ausgeführten Schaufeln 15 wird weniger Luft angesaugt und mit den Hackschnitzeln mitgeführt, was den Energiebedarf für den Antrieb des Hackschnitzelförderers weiter reduziert.

Weiterhin werden Reibungen und Quetschungen dadurch vermieden, dass die Zuführungsöffnung 24 der Förderschnecke 40 mit einem radialen Abstand A4 zu den Innenkanten 15i der Schaufeln 15 und mit einem radialen Abstand A5 zur Welle 11 angeordnet ist, wobei der Abstand A4 größer gewählt ist als das maximale Abmaß der zu transportierenden Hackschnitzel. Ebenso ist zur Vermeidung von Reibungen und Quetschungen der axiale Abstand A6 zwischen der Zuführungsöffnung 24 und der Radscheibe 13 größer realisiert als das größte Maß der mitgeführten Hackschnitzel.

Die entsprechenden radialen Abstände A7 der Außenkanten 15o der Schaufeln 15 zur Umfangswandung 23 sind so gering, wie technologisch möglich ausgeführt. Gegenwärtig werden dabei Abstände A7 von ca. 1 mm bis 1,5 mm erreicht. Der radiale Abstand A8 der Radscheibe 13 beziehungsweise des Kreisrings 14 zur Umfangswandung 23 können optional größer gewählt werden (ca. 5mm). So werden in die Zwischenräume zwischen Radscheibe 13 beziehungsweise Kreisring 14 und den Außenwänden geratene Hackschnitzel wieder mitgeführt.

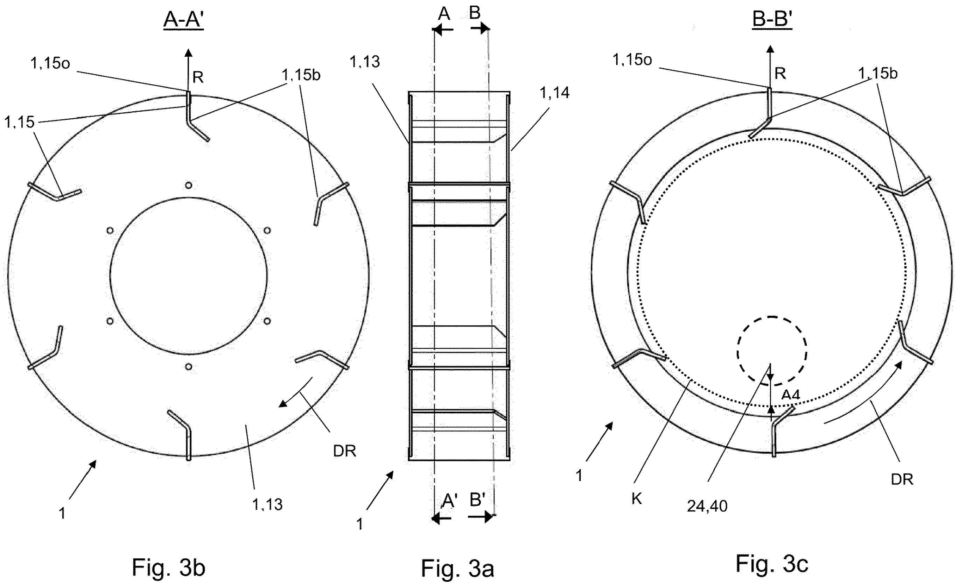

Die Fig. 3b und 3c zeigen jeweils einen Querschnitt durch einen Hackschnitzelförderer mit in der Drehrichtung DR gekröpften Schaufeln 15. Der zugehörige Längsschnitt ist in Fig. 3a gezeigt.

Ausgehend von den Darstellungen in Fig. 2a und 2b sind die Schaufeln 15 hier mit einer Kröpfung 15b ausgebildet. An der Außenkante 15o sind die Schaufeln 15 wie in Fig. 2b in radialer Richtung R orientiert. Davon ausgehend sind die Schaufeln 15 etwa in der Mitte mit ca. 35° in Drehrichtung DR des Schaufelrades 1 mit einer Kröpfung 15b beziehungsweise einem Knick 15b versehen. Die Schaufeln 15 ragen hier mit den Innenkanten 15i in radialer Richtung R über die Kreisringscheibe 14 hinaus (Fig. 3c) und beschreiben somit einen Schaufelinnenkantenkreis K. Die Zuführungsöffnung 24 der Förderschnecke 40 ist von den Innenkanten 15i der Schaufeln 15 mit dem Abstand A4 beabstandet. Entsprechend wird vermieden, dass einfallende Hackschnitzel zwischen der Zuführungsöffnung 24 und den Schaufeln 15 gequetscht werden.

Durch die Kröpfung 15b der Schaufeln 15 wird zudem dafür gesorgt, dass einfallende Hackschnitzel in Richtung der Umfangswandung abprallen und somit sofort gefördert werden.

Außerdem wird die aufgrund der Rotation des Schaufelrades 1 angesaugte Luftmenge durch die Kröpfung 15b der Schaufeln 15 reduziert und damit auf vorteilhafte Weise Antriebsenergie eingespart.

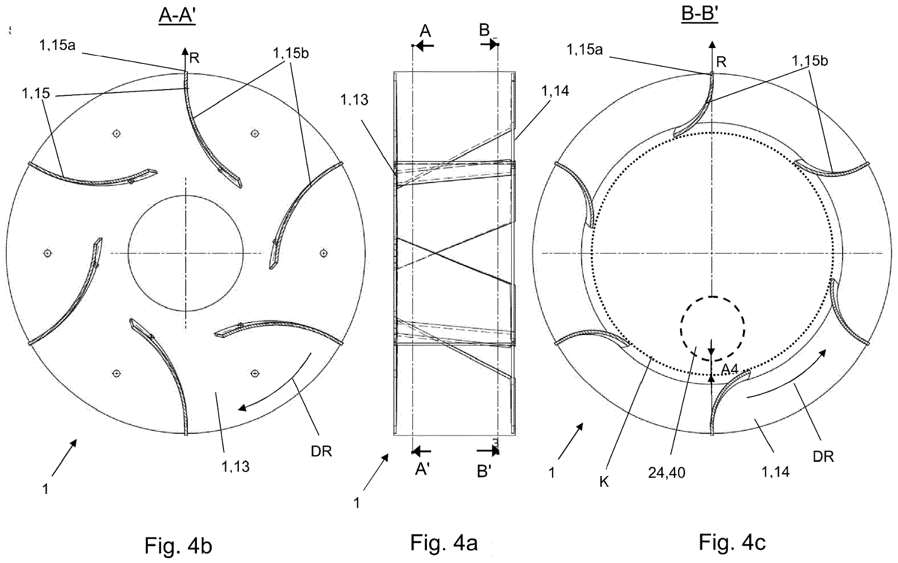

In Fig. 4b und 4c sind Querschnitte durch einen Hackschnitzelförderer im Unterschied zu Fig. 3a,b mit in Drehrichtung DR gebogenen Schaufeln 15 dargestellt. Den zugehörigen Längsschnitt zeigt Fig. 4a. Anstelle der in Fig. 3b,c gezeigten Kröpfung 15b sind die an der Außenseite des Schaufelrades 1 in radialer Richtung R orientierten Schaufeln 15 nach innen über die gesamte Länge mit einer in Drehrichtung DR gerichteten Biegung 15a ausgebildet. Dadurch wird gleichfalls vermieden, dass einfallende Hackschnitzel in Richtung der Umfangswandung abprallen und somit sofort gefördert werden.

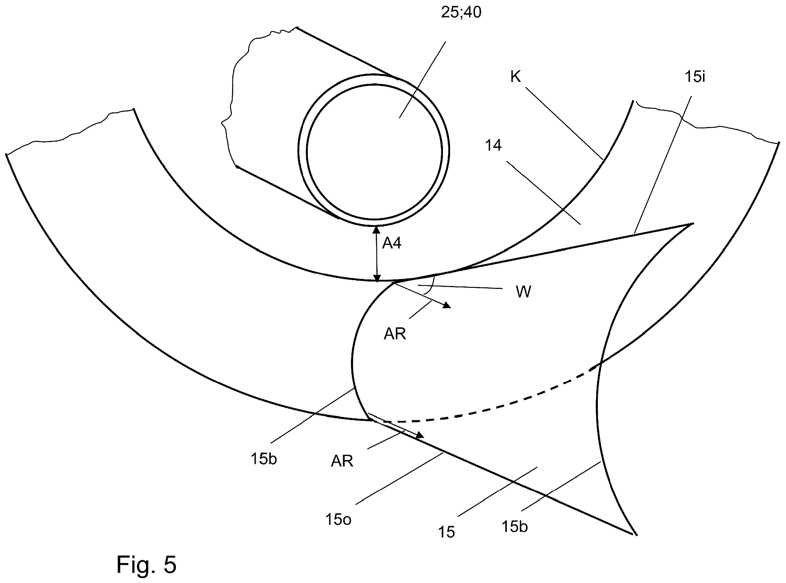

Die Fig. 5 zeigt eine von der Radscheibe (nicht dargestellt) aus gesehene Perspektivansicht einer kegelstumpfmantelsegmentförmig gebogenen Schaufel 15. Die Biegung 15a der Schaufel 15 weist auf der zur Radscheibe gerichteten Seite einen größeren Biegungsradius als auf der zur Kreisringscheibe 14 orientierten Seite auf. Die Schaufel 15 ist zwischen Radscheibe und Kreisringscheibe 14 befestigt, so dass die Außenkante 15o der Schaufel 15o parallel zur Umfangswandung (nicht dargestellt) des Gehäuses 2 und somit in axialer Richtung AR verläuft. Dementsprechend verlaufen die Innenkanten 15i der Schaufeln 15 in einem Winkel W schräg zu der in axialer Richtung AR orientierten Welle (nicht dargestellt). Somit beschreiben die rotierenden Schaufelinnenkanten 15i letztlich eine kegelstumpfmantelförmige Kontur.

### Bezugszeichen

- 1: Schleuderrad
- 11: Nabe
- 12: Antriebswelle, Welle
- 13: Radscheibe
- 14: Kreisringscheibe
- 15: Schaufeln
- 15a: Krümmung, Biegung der Schaufel
- 15b: Knick, Kröpfung der Schaufel
- 15i: (umlaufende) Innenkante der Schaufeln
- 15o: (umlaufende) Außenkante der Schaufeln
- 15r: radiale Ausdehnung der Schaufeln
- 2: Gehäuse
- 21: erste Seitenwand des Gehäuses
- 22: zweite Seitenwand des Gehäuses
- 23: Umfangswandung des Gehäuses
- 24: Zuführungsöffnung (in der ersten Seitenwand)
- 25: Auswurföffnung
- 40: Hackschnitzeltransportvorrichtung, Förderschnecke
- R: radiale Richtung
- K: Schaufelinnenkantenkreis
- A1: axialer Abstand von Seitenwand zur Radscheibe beziehungsweise Kreisringscheibe
- A2: radialer Abstand zwischen Nabe und Innendurchmesser der Kreisringscheibe
- A3: radialer Abstand zwischen Nabe und (umlaufenden) Innenkanten der Schaufeln
- A4: radialer Abstand zwischen Zuführungsöffnung und (umlaufenden) Innenkanten der Schaufeln
- A5: radialer Abstand zwischen Zuführungsöffnung und Nabe
- A6: axialer Abstand zwischen Zuführungsöffnung und Radscheibe
- A7: radialer Abstand der Außenkante der Schaufeln zur Umfangswandung
- A8: radialer Abstand der Radscheibe und des Kreisrings zur Umfangswandung
- DR: Drehrichtung
- AR: axiale Richtung
- W: Winkel zwischen axialer Richtung und Schaufelinnenkante

## Patentansprüche

1. Hackschnitzelförderer aufweisend:
- ein Schleuderrad (1) zur Förderung von Hackschnitzeln, wobei das Schleuderrad (1) auf einer horizontal ausgerichteten Antriebswelle (12) angeordnet ist,
- am Schleuderrad (1) radial außen liegend radial ausgerichtete Schaufeln (15) angeordnet sind,
- ein Gehäuse (2), das das Schleuderrad in Form zweier paralleler Seitenwände (21, 22) und einer Umfangswandung (23) umgibt und eine Zuführungsöffnung (24) für Hackschnitzel in einer Seitenwand (22) und eine senkrecht nach oben gerichtete Auswurföffnung (25) in der Umfangswandung (23), durch die hindurch die Hackschnitzel aus dem Gehäuse (2) gefördert werden, aufweist,
- einen Antrieb für die Antriebswelle (12) des Schleuderrades (1),
wobei
das Schleuderrad (1) eine Radscheibe (13) und eine Kreisringscheibe (14) aufweist, und die Schaufeln (15) zwischen der Radscheibe (13) und der Kreisringscheibe (14) angeordnet sind und wobei die Radscheibe (13) an der Radnabe (11) oder der Antriebswelle (12) befestigt ist,
oder
das Schleuderrad (1) zwei Kreisringscheiben (14) aufweist und die Schaufeln (15) zwischen diesen zwei Kreisringscheiben (14) angeordnet und über an den Schaufeln (15) angeordnete Streben, die eine geringere axiale Ausdehnung aufweisen, als die Schaufeln (15), mit der Radnabe (11) oder der Antriebswelle (12) verbunden sind,
und wobei
- die Zuführungsöffnung (24) in einer Seitenwand (22) angeordnet ist, der eine Kreisringscheibe (14) des Schleuderrades (1) benachbart ist und die Zuführungsöffnung (24) eine geringere Höhe über dem Boden aufweist, als die Antriebswelle (12),
- die Rotationsachse der Antriebswelle (12) des Schleuderrades (1) außerhalb der Zuführungsöffnung (24) liegt,
- die Auswurföffnung (25), in Drehrichtung (DR) des Schleuderrades (1) gesehen, zwischen 90° und 270° hinter der Zuführungsöffnung (24) angeordnet ist,
**dadurch gekennzeichnet, dass**
- die radiale Ausdehnung der Schaufeln (15) in Nabenrichtung an der Kreisringscheibe (14) die radiale Ausdehnung der Kreisringscheibe (14) nicht überschreitet,
- die Zuführungsöffnung (24) eine axial ins Innere des Gehäuses (2) gerichtete Ausstülpung aufweist, die in axialer Richtung über die Kreisringscheibe (14) hinweg in das Gehäuse (2) hineinreicht und die in radialer Richtung von den umlaufenden Schaufeln (15) beabstandet ist, und
- die ins Innere des Gehäuses (2) gerichtete Ausstülpung axial von der Radscheibe (13) oder den an den Radschaufeln (15) angeordneten Streben beabstandet ist.

2. Hackschnitzelförderer nach Anspruch 1, **dadurch gekennzeichnet, dass** der radiale Abstand (A4) der Ausstülpung der Zuführungsöffnung (24) von den umlaufenden Schaufeln, sowie der axiale Abstand (A6) der Ausstülpung zu der Radscheibe oder den an den Radschaufeln angeordneten Streben größer ist, als die größte Abmessung der zu fördernden Hackschnitzel.

3. Hackschnitzelförderer nach Anspruch 1 oder 2, **dadurch gekennzeichnet, dass** der Hackschnitzelförderer weiterhin eine Förderschnecke, ein Förderband oder eine Schurre aufweist durch die die Zuführung der Hackschnitzel zur Zuführungsöffnung (24) erfolgt.

4. Hackschnitzelförderer nach einem der Ansprüche 1 bis 3, **dadurch gekennzeichnet, dass** die Schaufeln (15) an der radial innen liegenden Kante eine Krümmung (15a) oder einen Knick (15b) aufweisen, die bzw. der der Drehrichtung (DR) entgegen gerichtet ist.

5. Hackschnitzelförderer nach Anspruch 4, **dadurch gekennzeichnet, dass** die Krümmung der Schaufeln (15) kegelstumpfmantelsegmentförmig ausgebildet ist, wobei die Innenkanten (15i) der Schaufeln (15) schräg/in einem Winkel (W) zur Welle (12) und die Außenkanten (15o) der Schaufeln (15) parallel zur Umfangswandung (23) des Gehäuses (2) orientiert sind und die Kegelfußseite der Schaufel (15) zur Radscheibe (13) hin orientiert ist.

6. Hackschnitzelförderer nach einem der Ansprüche 1 bis 5, **dadurch gekennzeichnet, dass** die radiale Ausdehnung der Schaufeln (15) zwischen einem Fünftel und einem Zwanzigstel des Durchmessers des Schleuderrades (1) beträgt.

7. Hackschnitzelförderer nach einem der Ansprüche 1 bis 6, **dadurch gekennzeichnet, dass** der radiale Abstand der Schaufeln (15) zur Umfangswandung (23) geringer ist, als der radiale Abstand der Radscheibe (13) und der Kreisringscheibe (14) oder der beiden Kreisringscheiben (14) zur Umfangswandung (23).

8. Hackschnitzelförderer nach Anspruch 7, **dadurch gekennzeichnet, dass** die radial außen liegenden Kanten der Schaufeln (15) wechselbar ausgeführt sind.

9. Hackschnitzelförderer nach einem der Ansprüche 1 bis 8, **dadurch gekennzeichnet, dass** die Radscheibe (13) innerhalb der Befestigung der Schaufeln (15) ganz oder teilweise mit Speichen ausgebildet ist.

## Claims

1. Wood chip conveyor comprising:
- an impeller (1) for conveying wood chips, the impeller (1) being arranged on a horizontally aligned drive shaft (12),
- radially aligned blades (15) lying radially outward being arranged on the impeller (1),
- a housing (2) which surrounds the impeller in the form of two parallel side walls (21, 22) and a peripheral wall (23), and which housing has a feed opening (24) for wood chips in one side wall (22) and an ejection opening (25) directed vertically upwards in the peripheral wall (23) through which opening the wood chips are conveyed out of the housing (2),
- a drive for the drive shaft (12) of the impeller (1),
the impeller (1) having a wheel disc (13) and an annular disc (14), and the blades (15) being arranged between the wheel disc (13) and the annular disc (14) and the wheel disc (13) being attached to the wheel hub (11) or the drive shaft (12), or
the impeller (1) having two annular discs (14) and the blades (15) being arranged between these two annular discs (14) and being connected to the wheel hub (11) or the drive shaft (12) via struts which are arranged on the blades (15), which struts have a smaller axial extension than the blades (15),
and
- the feed opening (24) being arranged in a side wall (22) to which an annular disc (14) of the impeller (1) is adjacent and the feed opening (24) having a lower height above the base than the drive shaft (12),
- the axis of rotation of the drive shaft (12) of the impeller (1) lying outside the feed opening (24),
- the ejection opening (25), seen in the direction of rotation (DR) of the impeller (1), being arranged between 90° and 270° behind the feed opening (24),
**characterised in that**
- the radial extension of the blades (15) in the direction of the hub on the annular disc (14) does not exceed the radial extension of the annular disc (14),
- the feed opening (24) has a protrusion directed axially into the interior of the housing (2), which protrusion extends in the axial direction over the annular disc (14) into the housing (2) and which is spaced apart from the rotating blades (15) in the radial direction, and
- the protrusion directed into the interior of the housing (2) is axially spaced apart from the wheel disc (13) or the struts arranged on the wheel blades (15).

2. Wood chip conveyor according to claim 1, **characterised in that** the radial distance (A4) of the protrusion of the feed opening (24) from the rotating blades, and the axial distance (A6) of the protrusion from the wheel disc or the struts arranged on the wheel blades, is greater than the largest dimension of the wood chips to be conveyed.

3. Wood chip conveyor according to either claim 1 or claim 2, **characterised in that** the wood chip conveyor also has a screw conveyor, a conveyor belt or a chute through which the wood chips are fed into the feed opening (24).

4. Wood chip conveyor according to any of claims 1 to 3, **characterised in that** the blades (15) have a curvature (15a) or a kink (15b) on the radially inner edge, which curvature or kink is directed opposite to the direction of rotation (DR).

5. Wood chip conveyor according to claim 4, **characterised in that** the curvature of the blades (15) is designed in the shape of a truncated cone jacket segment, the inner edges (15i) of the blades (15) being oriented obliquely/at an angle (W) to the shaft (12) and the outer edges (15o) of the blades (15) being oriented parallel to the peripheral wall (23) of the housing (2) and the conical foot side of the blade (15) being oriented towards the wheel disc (13).

6. Wood chip conveyor according to any of claims 1 to 5, **characterised in that** the radial extension of the blades (15) is between one fifth and one twentieth of the diameter of the impeller (1).

7. Wood chip conveyor according to any of claims 1 to 6, **characterised in that** the radial distance between the blades (15) and the peripheral wall (23) is smaller than the radial distance between the wheel disc (13) and the annular disc (14) or the two annular discs (14) from the peripheral wall (23).

8. Wood chip conveyor according to claim 7, **characterised in that** the edges of the blades (15) lying radially outward are designed to be exchangeable.

9. Wood chip conveyor according to any of claims 1 to 8, **characterised in that** the wheel disc (13) within the fastening of the blades (15) is entirely or partially designed with spokes.

## Revendications

1. Transporteur de copeaux comportant :
- une roue centrifuge (1) permettant de transporter des copeaux, dans lequel la roue centrifuge (1) est disposée sur un arbre d'entraînement (12) orienté horizontalement,
- des aubes (15) orientées radialement sont disposées radialement à l'extérieur au niveau de la roue centrifuge (1),
- un boîtier (2) qui entoure la roue centrifuge sous la forme de deux parois latérales parallèles (21,22) et d'une paroi circonférentielle (23) et comporte une ouverture d'alimentation (24) destinée aux copeaux dans une paroi latérale (22) et une ouverture d'éjection (25) orientée verticalement vers le haut dans la paroi circonférentielle (23), à travers laquelle les copeaux sont transportés hors du boîtier (2),
- un entraînement destiné à l'arbre d'entraînement (12) de la roue centrifuge (1), dans lequel
la roue centrifuge (1) comporte un disque de roue (13) et un disque annulaire (14), et les aubes (15) sont disposées entre le disque de roue (13) et le disque annulaire (14), et dans lequel le disque de roue (13) est fixé au moyeu de roue (11) ou à l'arbre d'entraînement (12),
ou
la roue centrifuge (1) comporte deux disques annulaires (14) et les aubes (15) sont disposées entre lesdits deux disques annulaires (14) et sont reliées au moyeu de roue (11) ou à l'arbre d'entraînement (12) par l'intermédiaire d'entretoises qui sont disposées au niveau des aubes (15) et comportent une étendue axiale inférieure à celle des aubes (15),
et dans lequel
- l'ouverture d'alimentation (24) est disposée dans une paroi latérale (22) adjacente à un disque annulaire (14) de la roue centrifuge (1) et l'ouverture d'alimentation (24) comporte une hauteur au-dessus du sol inférieure à celle de l'arbre d'entraînement (12),
- l'axe de rotation de l'arbre d'entraînement (12) de la roue centrifuge (1) se trouve à l'extérieur de l'ouverture d'alimentation (24),
- l'ouverture d'éjection (25), vue dans le sens de rotation (DR) de la roue centrifuge (1), est disposée entre 90° et 270° derrière l'ouverture d'alimentation (24), **caractérisé en ce que**
- l'étendue radiale des aubes (15) dans la direction du moyeu au niveau du disque annulaire (14) ne dépasse pas l'étendue radiale du disque annulaire (14),
- l'ouverture d'alimentation (24) comporte une protubérance orientée axialement vers l'intérieur du boîtier (2), laquelle protubérance s'étend dans la direction axiale au-dessus du disque annulaire (14) dans le boîtier (2) et est espacée, dans la direction radiale, des aubes (15) rotatives, et
- la protubérance orientée vers l'intérieur du boîtier (2) est espacée axialement du disque de roue (13) ou des entretoises disposées au niveau des aubes de roue (15).

2. Transporteur de copeaux selon la revendication 1, **caractérisé en ce que** la distance radiale (A4) de la protubérance de l'ouverture d'alimentation (24) par rapport aux aubes rotatives et la distance axiale (A6) de la protubérance par rapport au disque de roue ou aux entretoises disposées au niveau des aubes de roue est supérieure à la plus grande dimension des copeaux à transporter.

3. Transporteur de copeaux selon la revendication 1 ou 2, **caractérisé en ce que** le transporteur de copeaux comporte également une vis transporteuse, une bande transporteuse ou une goulotte à travers laquelle les copeaux sont acheminés vers l'ouverture d'alimentation (24).

4. Transporteur de copeaux selon l'une des revendications 1 à 3, **caractérisé en ce que** les aubes (15) comportent une courbure (15a) ou un pli (15b) au niveau du bord radialement intérieur, laquelle courbure ou lequel pli est opposé(e) au sens de rotation (DR).

5. Transporteur de copeaux selon la revendication 4, **caractérisé en ce que** la courbure des aubes (15) est réalisée sous la forme d'un segment d'enveloppe tronconique, dans lequel les bords intérieurs (15i) des aubes (15) sont inclinés/à un angle (W) par rapport à l'arbre (12) et les bords extérieurs (15o) des aubes (15) sont orientés parallèlement à la paroi circonférentielle (23) du boîtier (2) et le côté de pied conique de l'aube (15) est orienté vers le disque de roue (13).

6. Transporteur de copeaux selon l'une des revendications 1 à 5, **caractérisé en ce que** l'étendue radiale des aubes (15) est comprise entre un cinquième et un vingtième du diamètre de la roue centrifuge (1).

7. Transporteur de copeaux selon l'une des revendications 1 à 6, **caractérisé en ce que** la distance radiale entre les aubes (15) et la paroi circonférentielle (23) est inférieure à la distance radiale entre le disque de roue (13) et le disque annulaire (14) ou à la distance radiale entre les deux disques annulaires (14) et la paroi circonférentielle (23).

8. Transporteur de copeaux selon la revendication 7, **caractérisé en ce que** les bords radialement extérieurs des aubes (15) sont conçus pour être interchangeables.

9. Transporteur de copeaux selon l'une des revendications 1 à 8, **caractérisé en ce que** le disque de roue (13) à l'intérieur de la fixation des aubes (15) est entièrement ou partiellement réalisé avec des rayons.
